# EUROPEAN PATENT SPECIFICATION

(11) **EP 1 232 941 B1**
(45) Date of publication and mention of the grant of the patent: **21.06.2006**
(21) Application number: 02003603.4
(22) Date of filing: 15.02.2002
(51) Int. Cl.: B62M 25/08, B62J 39/00, H01H 13/02

(54) **Bicycle control device**
Fahrradsteuerungsvorrichtung
Dispositif de commande pour bicyclette

(30) Priority: 15.02.2001 US 785026
(43) Date of publication of application: 21.08.2002
(73) Proprietor: SHIMANO INC., Osaka (JP)
(72) Inventor: Iteya, Yoshihide, Izumisano-shi, Osaka (JP)
(74) Representative: GROSSE BOCKHORNI SCHUMACHER

(56) References cited:
- EP-A- 0 050 085
- EP-A- 0 641 711
- EP-A- 0 853 036
- FR-A- 682 123
- FR-A- 710 120
- GB-A- 2 140 624
- US-A- 3 383 487
- US-A- 3 863 040
- US-A- 4 565 909
- US-A- 5 099 094
- US-A- 5 214 256
- US-A- 5 245 147
- US-A- 6 164 677

## Description

### Field of the Invention

The present invention relates generally to bicycle control devices, and more particularly to an electric switch used to operate a bicycle computer, wherein the electrical switch is mounted in a recess defined in the bicycle control device.

### Background of the Invention

Modern bicycles allow the rider to control the gears, the brakes and other features of the bicycle to optimize the rider's experience. Much of the control functions are computerized so that a rider can control the particular function by simply pressing a switch. The switch is usually provided on a computerized control panel of a bicycle. A typical computerized control panel includes a base member mounted to the bicycle handlebar and numerous switches on the control panel, each switch corresponding to a particular function that is controllable by the rider.

During a ride, it is important that the rider be able to conveniently access the control switch associated with a particular function. Moreover, to retain control of the bicycle, it is desirable to provide a switch wherein the switch can be activated by the rider while allowing the rider to, simultaneously, retain a grip on the bicycle handlebar. However, while it is desirable to provide the switch close to the grip, it is not necessarily convenient to have the computerized control panel positioned near the grip such as disclosed in closest prior art document EP 0 641 711, for several reasons. First, it is visually more desirable to have the control panel centered in front of the bicycle rider during a ride. Second, a computerized bicycle may already have numerous devices, such as the brake control device and shifter, already attached to the handlebar near the grip. Accordingly, there may be little room for an additional computerized control panel.

Accordingly, it is desirable to provide a control switch that is close to the grip of the handlebar so as to be easily accessible to a bicycle rider during a ride without requiring the rider to remove his or her grip from the handlebar in order to access the control switch.

It is also desirable to provide a control switch that is remote from the cycle computer such that the computer can be installed in a location that is easily viewable by the bicycle rider.

Furthermore, it is desirable to provide a simple and inexpensive method of installing the control switch.

### Summary of the Preferred Embodiments

The invention is disclosed by the features of independent claim 1 and independent method claim 17.

A bicycle control device having a switch mounting recess therein is disclosed. The bicycle control device could be a shifter, a brake control mechanism or an integrated shifting and brake control device. A control switch of a cycle computer is mountable in the switch mounting recess. The control switch is connected to a cycle computer, located remote from the control switch, by a connecting cable. The control switch can be attached in the switch mounting recess by various means, including, adhesively connecting the control switch to the switch mounting recess. In one embodiment of the invention, the control switch is press fitted into the switch mounting recess. In another embodiment, an elastic portion of the control switch is press fitted into a hole in the switch mounting recess. The control switch can also be securely retained in the switch mounting recess by a retention ring attached to the control device.

Other objects, features and advantages of the present invention will become apparent to those skilled in the art from the following detailed description. It is to be understood, however, that the detailed description and specific examples, while indicating preferred embodiments of the present invention, are given by way of illustration and not limitation.

### Brief Description of the Drawings

The invention may be more readily understood by referring to the accompanying drawings in which:
FIG. 1a is a front plan view of a preferred embodiment of the handlebar assembly of the present invention;
FIG. 1b is front plan view of another embodiment of the handlebar assembly of the present invention;
FIG. 2 is a perspective view of a preferred embodiment of the control device of the present invention;
FIG. 3 is a side cross-sectional view of a preferred embodiment of the control switch of the present invention installed in a recess in the control device;
FIG. 4 is a side cross-sectional view of a preferred embodiment of the control switch of the present invention installed in a recess in the control device;
FIG. 5 is a side cross-sectional view of a preferred embodiment of the control switch of the present invention installed in a recess in the control device;
FIG. 6 is a side cross-sectional view of a preferred embodiment of the control switch of the present invention installed in a recess in the control device; and
FIG. 7 is a side cross-sectional view of a preferred embodiment of the control switch of the present invention installed in a recess in the control device.
Like numerals refer to like parts throughout the several views of the drawings.

### Detailed Description of the Preferred Embodiments

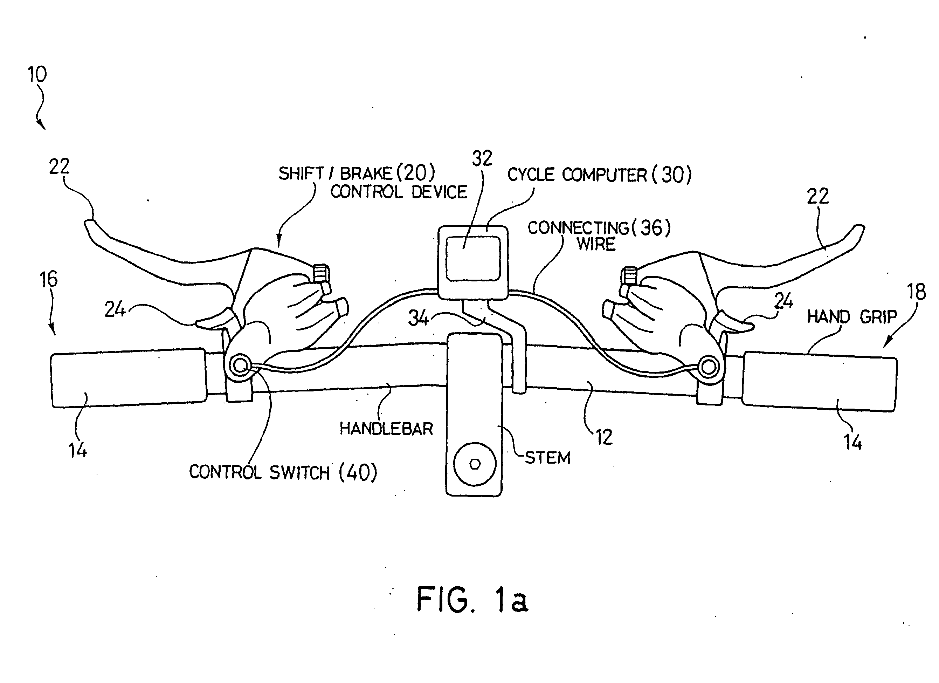

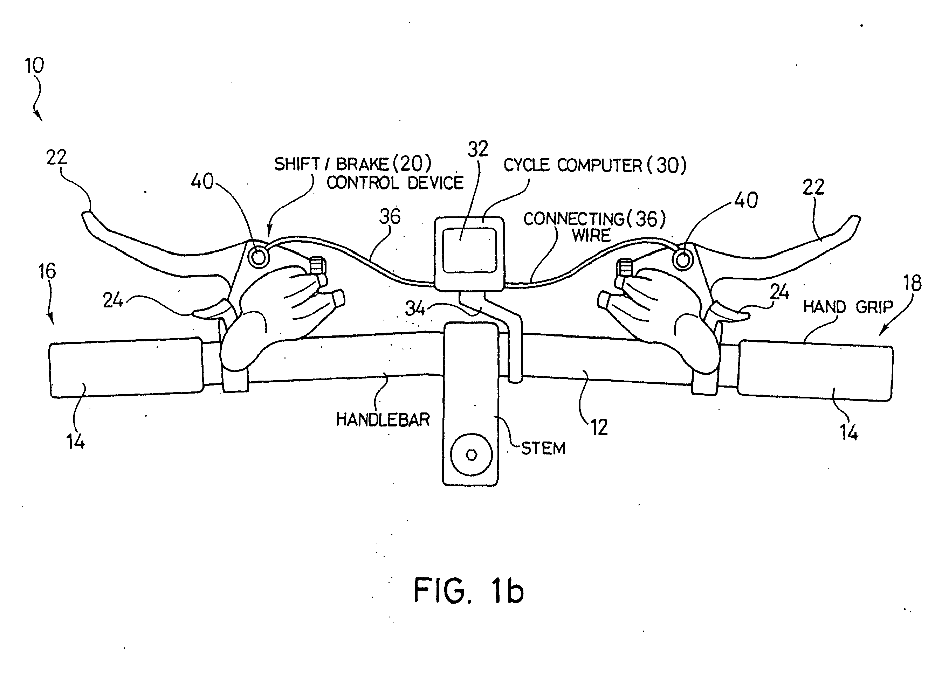

An exemplary embodiment of a handlebar assembly according to the principles of the present invention is illustrated in Figures 1a and 1b and identified by reference numeral 10. The handlebar assembly 10 includes a handlebar 12 and a pair of hand grips 14 attached at the opposite ends 16, 18 of the handlebar 12. A control device 20 is preferably attachable to the handlebar at a location proximal to the hand grip 14. A control device is defined herein as a mechanism for controlling a bicycle function, such as a shifter or a brake control apparatus. The control device also includes devices that combine two or more functional controls such as a combined brake and shifting device. In the embodiment shown in Figures 1a and 1b, the control device 20 is a combined brake and shifting device. However, it is envisioned that the invention encompasses any type of control device and is not limited to the control device listed and shown herein.

As shown in Figures 1a and 1b, in one embodiment of the present invention, the control device 20 includes a brake lever 22, a first shift lever 23 (not shown) and a second shift lever 24. The brake lever 22 controls the braking mechanism of the bicycle when activated, in a manner known in the art. The shift levers 23, 24 control the shifting mechanism of the bicycle when activated, in a manner known in the art. The brake lever 22 and shift levers 23, 24 are preferably positioned on the handlebar 12 at a location proximal the hand grip 14 such that the rider can maintain a hand on the grip 14 while using an index finger to operate the brake lever 22 or shift lever 24 or using a thumb to operate the shift lever 23.

The handlebar assembly 10 preferably includes a cycle computer 30 attached to the handlebar 12. In a preferred embodiment of the invention, the cycle computer includes a computer screen 32 positioned substantially above the center of the handlebar 12. In the embodiment shown in Figures 1a and 1b, the cycle computer 30 includes a computer bracket 34. The computer bracket 34 is attachable to the handlebar 12 and when installed maintains the cycle computer 30 in a stable, rigid position.

The cycle computer 30 is preferably operable using a control switch 40. In a preferred embodiment of the invention, the control switch 40 is positioned at a location remote from the cycle computer 30. Specifically, as shown in Figures 1a and 1b, the control switch 40 is provided on the control device 20 in a position that is conveniently accessible to the rider. In the embodiment shown in Figure 1a, the rider can maintain a grip on the hand grip 14 while using an index finger to operate a brake lever 22 or a shift lever 24, and using a thumb to operate a shift lever 23 or control switch 40. In another embodiment of the invention, as shown in Figure 1b, the control switch 40 is located on the control device 20 at a location that is conveniently accessible by the rider's index finger.

By providing the control switch 40 at a location remote from the cycle computer 30, the necessity of installing the computer 30 proximal to or integral with the control device 20 is eliminated. In this regard, the computer 30, and the computer screen 32, can be installed at a location that is more convenient for viewing by the rider while the control switch 40 can be installed at a location that is near the rider's hand. The control switch 40 is electrically connected to the computer 30 by the connecting cable 36. The connecting cable has one end attached to the control switch and the other end attached to the computer, such that by activation of the control switch 40, the rider activates a computer operation by the cycle computer 30. In another embodiment of the invention, the control switch 40 and the cycle computer 30 are in electrical communication via a remote wireless connection, known in the art.

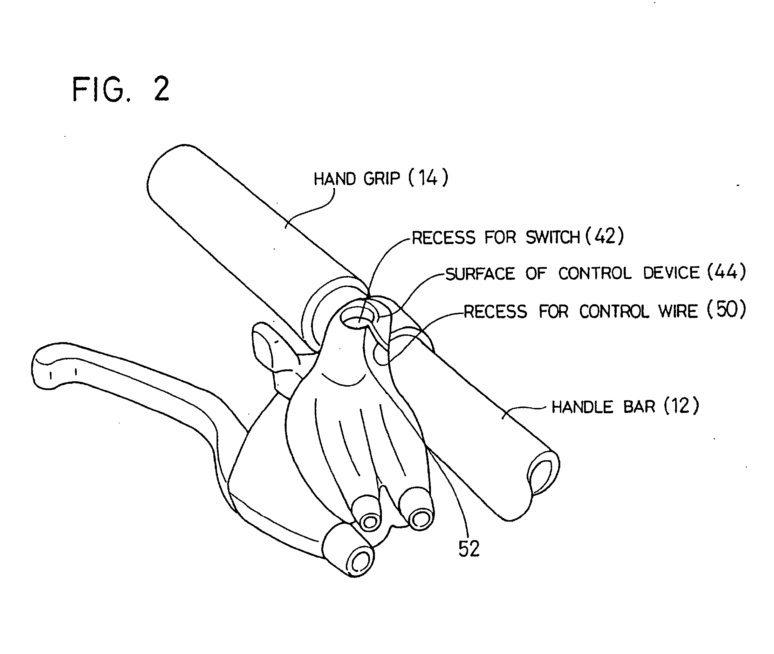

As shown in Figure 2, the control device 20 of the present invention is provided with a switch mounting recess 42. In a preferred embodiment of the invention, the switch mounting recess 42 is a bottomed hole for inserting and securing the control switch 40. The switch mounting recess 42 has the same shape as the control switch 40 and is configured to closely fit the control switch 40. In a preferred embodiment of the invention, the switch mounting recess 42 is dimensioned such that when the control switch 40 is installed, the control switch 40 is flush with the surface of the control device 44, shown in Figure 2.

The control device 20 preferably includes a cable mounting recess 50 therein dimensioned to receive a portion of the connecting cable 36 which connects the control switch 40 to the cycle computer 30. The cable mounting recess 50 preferably has an end 52 connected to the switch mounting recess 42 and extends on the surface of the control device 44 in the direction of the cycle computer 30. In a preferred embodiment of the invention, when the connecting cable 36 is mounted in the cable mounting recess 50, the connecting cable 36 is flush with the surface 44 of the control device 20. The cable mounting recess 50 preferably retains a portion of the connecting cable 36 securely therein and prevents it from movement.

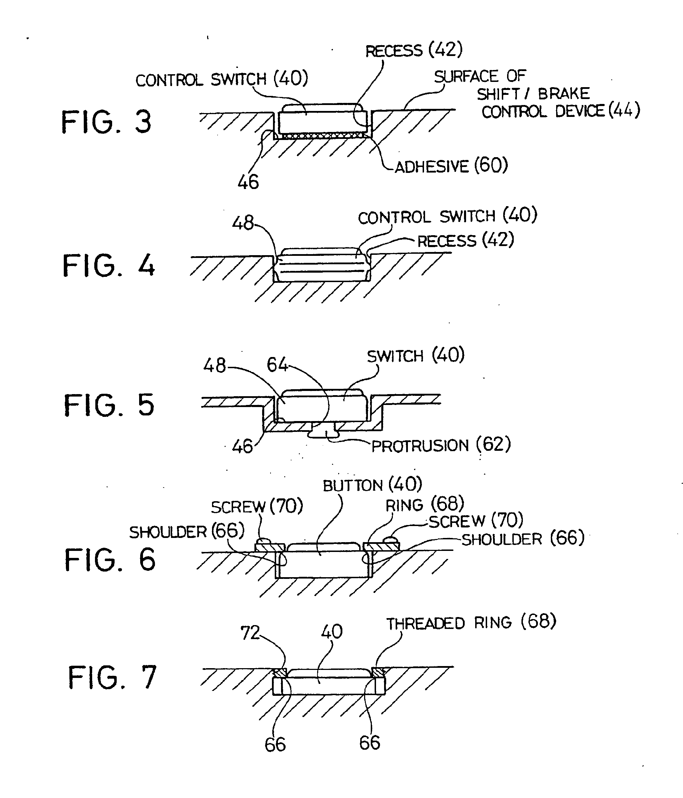

Figures 3 through 7 depict various means of installing the control switch 40 in the switch mounting recess 42 of the control device 20. As shown in Figure 3, in one embodiment of the invention, the control switch 40 is attached to the switch mounting recess 42 by a double-sided adhesive tape or other adhesive. In the embodiment shown in Figure 3, an adhesive layer 60 is positioned between the bottom surface 46 of the switch mounting recess and the control switch 40.

In the embodiment shown in Figure 4, the control switch 40 includes an outer casing 48 comprised of elastic material. The outer diameter or width of the control switch 40 is preferably larger than the inner diameter or width of the switch mounting recess 42. The control switch 40 is press fit into the switch mounting recess 42 such that the control switch is securely maintained in the switch mounting recess.

In the embodiment shown in Figure 5, the control switch 40 includes an attachment arm 62 protruding from the bottom thereof. The attachment arm 62 is preferably comprised of an elastic material and press fit into a hole 64 at the bottom 46 of the switch mounting recess 42. In a more preferred embodiment, the outer casing 48 of the control switch 40 and the attachment arm are integrally attached and both comprise of an elastic material.

In the embodiment shown in Figure 6, the outer casing 48 of the control switch 40 includes a shoulder 66. To secure the control switch 40 in the switch mounting recess 42, a retention ring 68 is secured to the top surface 44 of the control device 20 surrounding the control switch 40. The retention ring 68 is dimensioned to restrict the movement of the shoulder 66 such that the shoulder 66 is not able to move outside of the switch mounting recess 42. The retention ring 68 is preferably attached the top surface 44 of the control device 20 by a fastener 70. In the embodiment shown in Figure 6, fastener 70 is a pair of screws, however, any known fasteners can be used.

In the embodiment shown in Figure 7, the retention ring 68 is threadingly engaged to the inside diameter 72 of the switch mounting recess 42. The retention ring 68 is positioned proximal the control switch 40 and dimensioned to restrict the motion of the control switch 40. In a preferred embodiment, the retention ring is configured to allow a rider to access and activate the control switch 40 while securely holding the shoulder 66 of the switch in place.

In a preferred embodiment of the invention, the control switch 40 is detachable from the switch mounting recess 42. A detachable switch enables the user to purchase the control device separately from the bicycle computer and switch assembly. Furthermore, if the switch requires repair or maintenance, the switch can be removed without removing the control device entirely.

The embodiments described above are exemplary embodiments of a bicycle control device having a switch mounting recess therein. Those skilled in the art may now make numerous uses of, and departures from, the above-described embodiments without departing from the inventive concepts disclosed herein. Accordingly, the present invention is to be defined solely by the scope of the following claims.

## Claims

1. A bicycle control assembly for holding a control switch (40) for a computer, comprising:
a control device (20) attached proximal to a hand grip (14) of a handlebar (12) such that the rider's hand can reach the control device (20) while remaining on the hand grip (14), the control device (20) having a casing defining a switch mounting recess (42) therein; and
a cycle computer (30) being operable using the control switch (40);
**characterized in that**
said cycle computer (30) is attached to the handlebar (12) separate from the control device (20); and
said control switch (40) is mounted in the switch mounting recess (42) of the control device (20) positioned at a location remote from the cycle computer (30).

2. The bicycle control assembly according to claim 1, further comprising
a top surface (44) defining the recess (42) therein, wherein the recess (42) forms a container.

3. The bicycle control assembly according to one of the claims lor 2, wherein
the recess (42) is dimensioned to receive the computer control switch (40).

4. The bicycle control assembly according to one of the preceding claims, further com prising
a brake control device; and
a shift control device integrated with the brake control device; wherein the casing en compasses the brake control device and the shift control device.

5. The bicycle control assembly according to one of the preceding claims, wherein
the control switch is attached in the switch mounting recess (42) by an adhesive.

6. The bicycle control assembly according to one of the preceding claims, wherein
the switch mounting recess (42) defines a hole (64) therein, the control switch (40) having an attachment arm (62) made of an elastic material, wherein the attachment arm (62) is press fitted into the hole (64) of the switch mounting recess (42).

7. The bicycle control assembly according to one of the preceding claims, further comprising
an elastic outer cover (48) wherein the elastic outer cover (48) is press fitted into the switch mounting recess (42).

8. The bicycle control assembly according to one of the preceding claims, further com prising
a retention ring (68) configured to restrict the movement of the control switch (40).

9. The bicycle control assembly according to claim 8, wherein
the retention ring (68) is fastened to the casing.

10. The bicycle control assembly according to one of the claims 8 or 9, wherein
the retention ring (68) is threadingly engaged with the switch mounting recess (42).

11. The bicycle control assembly according to one of the preceding claims, wherein
the casing of the control device (20) defines a cable mounting recess (50), the cable mounting recess (50) is in communication with the switch mounting recess (42) and extending from the switch mounting recess (42).

12. The bicycle control assembly according to one of the preceding claims, wherein
a connecting cable (36) electrically connects the control switch (40) to the cycle computer (30).

13. The bicycle control assembly according to claims 11 and 12, wherein
the cable mounting recess (50) extends from the switch mounting recess (42) in the direction of the cycle computer (30), and wherein a portion of the connecting cable (36) is mounted in the cable mounting recess (50).

14. The bicycle control assembly of claim 1, wherein
the control device (20) comprises a shift control device.

15. The bicycle control assembly of claim 1, wherein
the control device (20) comprises a brake control device.

16. The bicycle control assembly of claim 1, wherein
the control device (20) comprises a shift control device and a brake control device.

17. A method of installing a bicycle control assembly by according to one of the claims 1 to 16, comprising the steps of:
installing a control switch (40) to a control device (20)
providing the control switch (40) and the control device (20) defining the switch mounting recess (42) therein, wherein the switch mounting recess (42) is dimensioned to receive the control switch (40); and
securing the control switch (40) in the switch mounting recess (42).

18. The method according to claim 17, wherein
the step of securing the control switch (40) comprises adhesively attaching the control switch (40) to the switch mounting recess (42).

19. The method according to claim 17, further comprising the steps of:
providing an attachment arm (62) connected to the control switch (40), wherein the attachment arm (62) comprises an elastic material;
providing a bottom surface (46) of the switch mounting recess (42), wherein the bottom surface (46) defines a hole (64) therein; and
press fitting the elastic material into the hole (64) in the bottom surface (46) of the switch mounting recess (42).

20. The method according to claim 17, further comprising the steps of:
providing an elastic outer cover (48) surrounding the control switch (40); and
press fitting the elastic outer cover (48) into the switch mounting recess (42).

21. The method according to claim 17, further comprising the steps of:
providing a retention ring (68); and
attaching the retention ring (68) to the control device (20) in a manner that restricts the movement of the control switch (40).

22. The method according to claim 21, wherein
the step of attaching the retention ring (68) to the control device (20) includes fastening the retaining ring (68) to a top surface (44) of the control device (20).

23. The method according to claim 21, wherein
the step of attaching the retention ring (68) to the control device (20) includes threadingly engaging the ring with the switch mounting recess (42).

## Patentansprüche

1. Fahrradsteuerbaugruppe zum Halten eines Steuerschalters (40) für einen Computer, aufweisend:
eine Steuereinrichtung (20), die proximal zu einem Handgriff (14) einer Lenkstange (12) befestigt ist, derart, dass die Hand des Fahrers die Steuereinrichtung (20) erreichen kann, während sie auf dem Handgriff (14) verbleibt, wobei die Steuereinrichtung (20) ein Gehäuse aufweist, das eine Schalterbefestigungsvertiefung (42) definiert; und
einen Fahrradcomputer (30), der unter Verwendung des Steuerschalters (40) bedienbar ist;
**dadurch gekennzeichnet, dass**
der Fahrradcomputer (30) an der Lenkstange (12) separat von der Steuereinrichtung (20) befestigt ist; und
der Steuerschalter (40) in der Schalterbefestigungsvertiefung (42) der Steuereinrichtung (20) befestigt ist, die an einem vom Fahrradcomputer (30) entfernten Ort positioniert ist.

2. Fahrradsteuerbaugruppe nach Anspruch 1, weiter aufweisend:
eine Oberseite (44), in welcher die Vertiefung (42) definiert ist, wobei die Vertiefung (42) eine Aufnahmeeinrichtung bildet.

3. Fahrradsteuerbaugruppe nach einem der Ansprüche 1 oder 2, bei der
die Vertiefung (42) dimensioniert ist, um den Computersteuerschalter (40) aufzunehmen.

4. Fahrradsteuerbaugruppe nach einem der vorhergehenden Ansprüche, weiter aufweisend:
eine Bremssteuereinrichtung; und
eine Schaltsteuereinrichtung, die mit der Bremssteuereinrichtung integral ist; wobei das Gehäuse die Bremssteuereinrichtung und die Schaltsteuereinrichtung umschließt.

5. Fahrradsteuerbaugruppe nach einem der vorhergehenden Ansprüche, bei der
der Steuerschalter in der Schalterbefestigungsvertiefung (42) mittels eines Klebstoffs befestigt ist.

6. Fahrradsteuerbaugruppe nach einem der vorhergehenden Ansprüche, bei der
in der Schalterbefestigungsvertiefung (42) ein Loch (64) definiert ist, wobei der Steuerschalter (40) einen aus einem elastischen Material bestehenden Befestigungsarm (62) aufweist und der Befestigungsarm (62) in das Loch (64) der Schalterbefestigungsvertiefung (42) eingepresst ist.

7. Fahrradsteuerbaugruppe nach einem der vorhergehenden Ansprüche, weiter aufweisend:
eine elastische Außenabdeckung (48), wobei die elastische Außenabdeckung (48) in die Schalterbefestigungsvertiefung (42) eingepresst ist.

8. Fahrradsteuerbaugruppe nach einem der vorhergehenden Ansprüche, weiter aufweisend:
einen Rückhaltering (68), der konfiguriert ist, um die Bewegung des Steuerschalters (40) zu begrenzen.

9. Fahrradsteuerbaugruppe nach Anspruch 8, bei der
der Rückhaltering (68) am Gehäuse befestigt ist.

10. Fahrradsteuerbaugruppe nach einem der Ansprüche 8 oder 9, bei der
der Rückhaltering (68) mit der Schalterbefestigungsvertiefung (42) in Verschraubungseingriff ist.

11. Fahrradsteuerbaugruppe nach einem der vorhergehenden Ansprüche, bei der
das Gehäuse der Steuereinrichtung (20) eine Kabelbefestigungsaussparung (50) definiert, wobei die Kabelbefestigungsaussparung (50) sich in Kommunikation mit der Schalterbefestigungsvertiefung (42) befindet und sich von der Schalterbefestigungsvertiefung (42) aus erstreckt.

12. Fahrradsteuerbaugruppe nach einem der vorhergehenden Ansprüche, bei der
ein Verbindungskabel (36) den Steuerschalter(40) mit dem Fahrradcomputer (30) elektrisch verbindet.

13. Fahrradsteuerbaugruppe nach Anspruch 11 und 12, bei der
die Kabelbefestigungsaussparung (50) sich von der Schalterbefestigungsvertiefung (42) in Richtung des Fahrradcomputers (30) erstreckt und bei der ein Abschnitt des Verbindungskabels (36) in der Kabelmontageaussparung (50) montiert ist.

14. Fahrradsteuerbaugruppe nach Anspruch 1, bei der
die Steuereinrichtung (20) eine Schaltsteuereinrichtung aufweist.

15. Fahrradsteuerbaugruppe nach Anspruch 1, bei der
die Steuereinrichtung (20) eine Bremssteuereinrichtung aufweist.

16. Fahrradsteuerbaugruppe nach Anspruch 1, bei der
die Steuereinrichtung (20) eine Schaltsteuereinrichtung und eine Bremssteuereinrichtung aufweist.

17. Verfahren zum Installieren einer Fahrradsteuerbaugruppe gemäß einem der Ansprüche 1 bis 16, welches folgende Schritte umfasst:
Installieren eines Steuerschalters (40) an einer Steuereinrichtung (20) durch Vorsehen des Steuerschalters (40) und der Steuereinrichtung (20), in welcher die Schalterbefestigungsvertiefung(42) definiert ist, wobei die Schalterbefestigungsvertiefung (42) dimensioniert ist, um den Steuerschalter (40) aufzunehmen; und
Befestigen des Steuerschalters (40) in der Schalterbefestigungsvertiefung (42).

18. Verfahren nach Anspruch 17, bei dem
der Schritt des Befestigens des Steuerschalters (40) beinhaltet, dass der Steuerschalter (40) an der Schalterbefestigungsvertiefung (42) durch Verkleben befestigt wird.

19. Verfahren nach Anspruch 17, welches weiter folgende Schritte aufweist:
Vorsehen eines Befestigungsarms (62), der mit dem Steuerschalter (40) verbunden ist, wobei der Befestigungsarm (62) ein elastisches Material aufweist;
Vorsehen einer Bodenfläche (46) der Schalterbefestigungsvertiefung (42), wobei in der Bodenfläche (46) ein Loch (64) definiert ist; und
Einpressen des elastischen Materials in das Loch (64) in der Bodenfläche (46) der Schalterbefestigungsvertiefung (42).

20. Verfahren nach Anspruch 17, welches weiter folgende Schritte aufweist:
Vorsehen einer elastischen Außenabdeckung (48), welche den Steuerschalter (40) umgibt; und
Einpressen der elastischen Außenabdeckung (48) in die Schalterbefestigungsvertiefung (42).

21. Verfahren nach Anspruch 17, welches weiter folgende Schritte aufweist:
Vorsehen eines Rückhalterings (68); und
Befestigen des Rückhalterings (68) an der Steuereinrichtung (20) in einer Weise, dass die Bewegung des Steuerschalters (40) eingeschränkt ist.

22. Verfahren nach Anspruch 21, bei dem
der Schritt des Befestigens des Rückhalterings (68) an der Steuereinrichtung (20) beinhaltet, dass der Rückhaltering (68) an einer Oberseite (44) der Steuereinrichtung (20) befestigt wird.

23. Verfahren nach Anspruch 21, bei dem
der Schritt des Befestigens des Rückhalterings (68) an der Steuereinrichtung (20) beinhaltet, dass der Ring mit der Schalterbefestigungsvertiefung (42) in Verschraubungseingriff gebracht wird.

## Revendications

1. Assemblage de commande de bicyclette pour contenir un interrupteur (40) de commande pour un compteur, comprenant :
un dispositif (20) de commande fixé à proximité d'une poignée (14) d'un guidon (12), de sorte que la main d'un cycliste peut atteindre le dispositif (20) de commande, tout en restant sur la poignée (14), le dispositif (20) de commande comportant un boîtier définissant un évidement (42) de montage de l'interrupteur dans celui-ci ; et
un cyclomètre (30) pouvant être actionné au moyen de l'interrupteur (40) de commande ; **caractérisé en ce que** :
ledit cyclomètre (30) est fixé au guidon (12), séparément du dispositif (20) de commande ; et
ledit interrupteur (40) de commande est monté dans l'évidement (42) de montage de l'interrupteur du dispositif (20) de commande, positionné à un emplacement à distance du cyclomètre (30).

2. Assemblage de commande de bicyclette selon la revendication 1, comprenant en outre :
une surface (44) supérieure définissant l'évidement (42) à l'intérieur de celle-ci,
dans lequel l'évidement (42) forme un contenant.

3. Assemblage de commande de bicyclette selon l'une des revendications 1 ou 2, dans lequel l'évidement (42) est dimensionné pour recevoir l'interrupteur (40) de commande du cyclomètre.

4. Assemblage de commande de bicyclette selon l'une des revendications précédentes, comprenant en outre :
un dispositif de commande de frein ; et
un dispositif de commande de vitesses intégré au dispositif de commande de frein,
dans lequel le boîtier englobe le dispositif de commande de vitesses et le dispositif de commande de frein.

5. Assemblage de commande de bicyclette selon l'une des revendications précédentes, dans lequel l'interrupteur de commande est fixé dans l'évidement (42) de montage de l'interrupteur, au moyen d'un adhésif.

6. Assemblage de commande de bicyclette selon l'une des revendications précédentes, dans lequel l'évidement (42) de montage de l'interrupteur définit un trou (64) à l'intérieur de celui-ci, l'interrupteur (40) de commande ayant un bras (62) de fixation constitué d'un matériau élastique, dans lequel le bras (62) de fixation est emmanché à force dans le trou (64) de l'évidement (42) de montage de l'interrupteur.

7. Assemblage de commande de bicyclette selon l'une des revendications précédentes, comprenant en outre :
un couvercle (48) extérieur élastique, dans lequel le couvercle (48) extérieur élastique est emmanché à force dans l'évidement (42) de montage de l'interrupteur.

8. Assemblage de commande de bicyclette selon l'une des revendications précédentes, comprenant en outre :
une bague (68) de retenue, configurée pour restreindre le mouvement de l'interrupteur (40) de commande.

9. Assemblage de commande de bicyclette, selon la revendication 8, dans lequel la bague (68) de retenue est fixée au boîtier.

10. Assemblage de commande de bicyclette selon l'une des revendications 8 et 9, dans lequel la bague (68) de retenue coopère par vissage avec l'évidement (42) de montage de l'interrupteur.

11. Assemblage de commande de bicyclette selon l'une des revendications précédentes, dans lequel le boîtier du dispositif (20) de commande définit un évidement (50) de montage de câble, l'évidement (50) de montage de câble communiquant avec l'évidement (42) de montage de l'interrupteur et s'étendant à partir de l'évidement (42) de montage de l'interrupteur.

12. Assemblage de commande de bicyclette selon l'une des revendications précédentes, dans lequel un câble (36) de connexion connecte électriquement l'interrupteur (40) de commande au cyclomètre (30).

13. Assemblage de commande de bicyclette selon les revendications 11 et 12, dans lequel l'évidement (50) de montage de câble s'étend à partir de l'évidement (42) de montage de l'interrupteur, dans la direction du cyclomètre (30), et dans lequel une partie du câble (36) de connexion est montée dans l'évidement (50) de montage de câble.

14. Assemblage de commande de bicyclette selon la revendication 1, dans lequel le dispositif (20) de commande comprend un dispositif de commande de vitesses.

15. Assemblage de commande de bicyclette selon la revendication 1, dans lequel le dispositif (20) de commande comprend un dispositif de commande de frein.

16. Assemblage de commande de bicyclette selon la revendication 1, dans lequel le dispositif (20) de commande comprend un dispositif de commande de vitesses et un dispositif de commande de frein.

17. Procédé pour installer un assemblage de commande de bicyclette selon l'une des revendications 1 à 16, comprenant les étapes consistant à :
monter un interrupteur (40) de commande sur un dispositif (20) de commande en prévoyant l'interrupteur (40) de commande et le dispositif (20) de commande définissant l'évidement (42) de montage de l'interrupteur dans celui-ci, l'évidement (42) de montage de l'interrupteur étant dimensionné pour recevoir l'interrupteur (40) de commande ; et
fixer l'interrupteur (40) de commande dans l'évidement (42) de montage de l'interrupteur.

18. Procédé selon la revendication 17, dans lequel l'étape de fixation de l'interrupteur (40) de commande comprend le fait de rendre l'interrupteur (40) de commande solidaire de manière adhésive de l'évidement (42) de montage de l'interrupteur.

19. Procédé selon la revendication 17, comprenant en outre, les étapes consistant à :
prévoir un bras (62) de fixation, relié à l'interrupteur (40) de commande, le bras (62) de fixation comprenant un matériau élastique ;
prévoir une surface (46) inférieure de l'évidement (42) de montage de l'interrupteur, la surface (46) inférieure définissant un trou (64) à l'intérieur de celui-ci ; et
emmancher à force le matériau élastique dans le trou (64) de la surface (46) inférieure de l'évidement (42) de montage de l'interrupteur.

20. Procédé selon la revendication 17, comprenant en outre, les étapes consistant à :
prévoir un couvercle (48) extérieur élastique entourant l'interrupteur (40) de commande ; et
emmancher à force le couvercle (48) extérieur élastique dans l'évidement (42) de montage de l'interrupteur.

21. Procédé selon la revendication 17, comprenant en outre, les étapes consistant à :
prévoir une bague (68) de retenue ; et
fixer la bague (68) de retenue au dispositif (20) de commande, d'une manière qui restreigne le mouvement de l'interrupteur (40) de commande.

22. Procédé selon la revendication 21, dans lequel l'étape de fixation de la bague (68) de retenue au dispositif (20) de commande, comprend le fait de rendre la bague (68) de retenue solidaire d'une surface (44) supérieure du dispositif (20) de commande.

23. Procédé selon la revendication 21, dans lequel l'étape de fixation de la bague (68) de retenue au dispositif (20) de commande comprend le fait de faire coopérer par vissage la bague avec l'évidement (42) de montage de l'interrupteur.
